# EUROPÄISCHE PATENTSCHRIFT

(11) **EP 2 102 972 B1**
(45) Veröffentlichungstag und Bekanntmachung des Hinweises auf die Patenterteilung: **28.03.2018**
(21) Anmeldenummer: 07802325.6
(22) Anmeldetag: 15.09.2007
(51) Int. Cl.: H02K 21/18, H02K 29/03

(54) **NASSLAEUFERPUMPE MIT EINER EINPHASIGEN PERMANENT-ERREGTEN SYNCHRONMASCHINE**
WET ROTOR PUMP WITH A SINGLE-PHASE PERMANENT MAGNET SYNCHRONOUS MACHINE
POMPE À ROTOR NOYÉ COMPRENANT UNE MACHINE SYNCHRONE À EXCITATION PERMANENTE MONOPHASÉE

(30) Priorität: 09.12.2006 DE 102006058143
(43) Veröffentlichungstag der Anmeldung: 23.09.2009
(73) Patentinhaber: WILO SE, 44263 Dortmund (DE)
(72) Erfinder: HEESE, Thomas, 44263 Dortmund (DE); UMMELMANN, Roland, 44149 Dortmund (DE)
(74) Vertreter: Cohausz Hannig Borkowski Wißgott
(86) Internationale Anmeldenummer: PCT/EP2007/008041
(87) Internationale Veröffentlichungsnummer: WO 2008/067861

(56) Entgegenhaltungen:
- EP-A- 0 786 851
- WO-A-82/03928
- DE-A1- 2 725 381
- DE-U1-202005 002 926
- US-A- 3 256 453
- US-A- 3 898 789

## Beschreibung

Die vorliegende Erfindung betrifft eine Nassläuferpumpe mit einer einphasigen permanent-erregten Synchronmaschine, umfassend mindestens eine Statorwicklung, ein geblechtes Statorpaket mit zwei Polschenkeln und einen permanent-erregten Rotor, der zwischen den Polschenkeln unter Bildung eines magnetischen Spaltes angeordnet ist.

Einphasige Synchronmaschinen für Trockenläufer mit einem permanentmagnetischen Rotor sind bekannt. Sie weisen üblicherweise ein etwa U-förmiges Statorblechpaket auf, an dessen freien Enden Pole mit Polschenkeln ausgebildet sind, zwischen denen der permanentmagnetische Rotor angeordnet ist. Rotor und Blechpaket bilden auf diese Weise einen magnetischen Kreis. Das Statorblechpaket ist üblicherweise von einer dem Rotor gegenüberliegenden Wicklung umgeben, es gibt jedoch auch Anordnungen, bei denen zwei Statorwicklungen, die einander gegenüberliegen, die die zu den Statorpolen führenden Arme des Statorbleches umschließen.

Trockenläufermotoren benötigen in der Regel kleine Anlaufmomente, da kein durch die Rotation des Rotors in der Flüssigkeit bedingtes Reibmoment vorliegt. Damit ist bei derartigen Motoren nur eine geringe Abweichung der Rotorposition von der natürlichen Ruheposition notwendig, um einen sicheren Anlauf zu garantieren. Es ist bekannt, die Abweichung der Rotorposition bei Ruhelage von der natürlichen Ruheposition bei nicht erregten Statorspulen durch unsymmetrische Statorpole zu erzielen oder Rotoren zu verwenden, die, bezogen auf ihre Magnetisierungsachse, einen Versatz aufweisen. Letztgenannte Anordnungen sind beispielsweise aus der US-Schrift 2,601,517 bekannt. Unsymmetrische Ausführungen der Statorpole offenbart demgegenüber beispielsweise die deutsche Offenlegungsschrift DE 14 38 569.

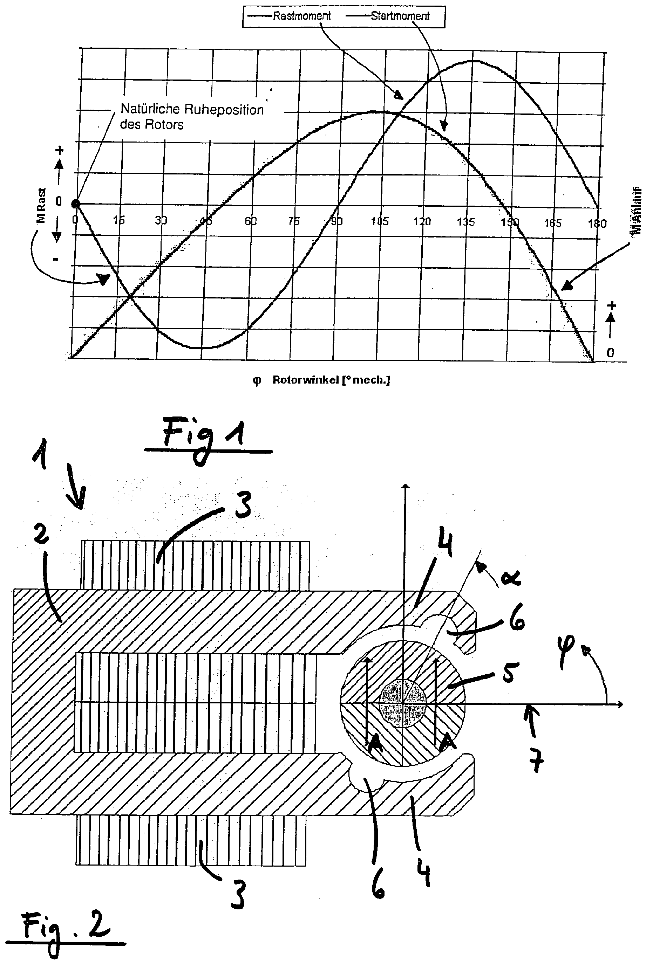

Bei diesen Einphasenmotoren, bei denen der magnetische Rotor üblicherweise zweipolig ausgebildet ist, besteht stets das Problem, dass das Anlaufmoment gegenüber dem Lastmoment und Wirken der Reibmomente zu gering ist, und der Motor nicht anläuft. Das Anlaufmoment ist hierbei abhängig von der Rotorwinkelposition ϕ zum Einschaltzeitpunkt und kann dabei Werte zwischen Null und einem maschinenspezifischen Maximum annehmen (siehe Figur 1). Um ein Anlaufmoment größer Null sicherzustellen, wird der Rotor durch ein Rastmoment in einer definierten Ruheposition ϕ ausgerichtet. Diese Position wird so gewählt, dass das innere Drehmoment bei Erregung der Statorspulen das Rastmoment und die weiteren externen Drehmomente überschreitet, so dass das resultierende Moment die Beschleunigung des Rotors gewährleistet.

Die Offenlegungsschrift DE 1 438 569 offenbart einen Trockenläufer mit Statorpolen, die nicht kreissymmetrisch sind, sondern an zwei diametral gegenüberliegenden Polenden tangential auslaufen, so dass der Spalt in einem teilzylindrischen Abschnitt unverändert ist und sich mit Beginn des tangential auslaufenden Statorpoles stetig erweitert. Durch die asymmetrische Form der Statorpole wird gewährleistet, dass der Läufer eine von seiner Ruhelage bei nicht erregter Statorspule abweichende Lage derart einnimmt, dass seine magnetische Induktion mit der Richtung des resultierenden Spulenfeldes einen Winkel bildet, der im Bereich von ca. 5 Grad liegt. Hierdurch wird das Anlaufmoment geringfügig vergrößert, jedoch erhöht sich gleichzeitig auch das Rastmoment, was mit einer erhöhten Geräuschemission und Vibrationen verbunden ist.

Weiterhin ist aus der US-Schrift 2,185,990 bekannt, die Statorpole mit Aussparungen zu versehen, die haifischflossenartig ausgebildet sind, so dass in Umfangsrichtung der zwischen Rotor und Statorpol gebildete Spalt an einem Ende der Aussparung sprunghaft vergrößert ist. Derartige Unsymmetrien vergrößern zwar das Anlaufmoment, beeinflussen das Magnetfeld aber derart nachteilig, dass auch das Rastmoment erhöht wird. Dies führt wiederum zu erheblichen Vibrationen des Motors, höheren Verschleiß der Lager samt einer damit einhergehenden geringeren Lebensdauer sowie verstärkter Geräuschemission. Derartige Rotoren sind daher nicht für Anwendungen geeignet, bei denen hohe Anforderungen an Laufruhe und Langlebigkeit gestellt werden.

Aus der US-Schrift 3,256,453 A ist es bekannt, die Statorpole mit Aussparungen zu versehen, die halbzylindrisch sind ausgebildet sind. Es wird ein 16-poliger Rotor verwendet, der zwischen zwei Polschenkeln einliegt, in denen jeweils drei Aussparungen symmetrisch bezogen auf die Mittelebene zwischen den Polschenkeln ausgebildet sind, so dass zwischen den Aussparungen jeweils ein Statorpol liegt.

Die deutsche Gebrauchsmusterschrift beschreibt eine Einphasen-Wicklungs-Gleichstrom-Motorpumpe mit zwei Polschenkeln und zwei sich gegenüberliegenden Ausnehmungen im Wesentlichen konstanter radialer Tiefe, die sich über etwa die Hälfte des Polschenkelumfangs erstrecken.

Die europäische Patentanmeldung EP 0 786 851 A1 offenbart einen Haushaltsgerät-Pumpenantrieb mit einem selbstanlaufenden Einphasen-Synchronmotor, bei dem zur Minderung der Betriebsgeräusche ein gegenseitig nicht-achsparalleler Verlauf der Polteilung des Stators einerseits gegenüber der Polteilung des Rotors andererseits vorgesehen ist.

Es ist Aufgabe der vorliegenden Erfindung, eine Nassläuferpumpe mit einer einphasigen permanent-erregten Synchronmaschine bereit zu stellen, die zur Gewährleistung eines sicheren Anlaufs ein erhöhtes Anlaufmoment aufweist, ohne dabei jedoch das Rastmoment zu vergrößern, so dass eine geringe Geräuschemission und hohe Laufruhe erreicht und die Lebensdauer gesteigert wird.

Diese Aufgabe wird durch die Merkmale des kennzeichnenden Teils des Anspruchs 1 gelöst.

Die vorliegende Erfindung ist als Einphasenmotor für den Einsatz bei Nassläuferpumpen vorgesehen, bei denen aufgrund des erhöhten Reibmomentes ein Anlaufmoment erforderlich ist, welches größer als bei Trockenläufern ist. Insbesondere ist der erfindungsgemäße Einphasenmotor für den Einsatz in Heizungspumpen geeignet, bei denen hohe Anforderungen an die Geräuschemission und Laufruhe bestehen, da sich Vibrationen über ein Heizungssystem im Gebäude übertragen und im Wohnbereich geräuschstarke Pumpen als störend empfunden werden.

Erfindungsgemäß können die Polschenkel des Statorpaketes jeweils an mindestens einer definierten Position zumindest eine Aussparung derart aufweisen, dass der magnetische Spalt im Bereich der Aussparungen vergrößert ist, und dass der Spalt beidseits der Aussparungen in Umfangsrichtung unverändert ist. Durch die Maßnahme wird das magnetische Feld durch den Rotor derart beeinflusst, dass sich der Rotor bei nicht erregten Statorwicklungen in einer von der natürlichen Ruhelage abweichenden Rotorposition einpendelt, so dass bei Bestromung der Statorspulen in Folge des entstehenden magnetischen Feldes ein Anlaufmoment erzielt wird, welches zur Beschleunigung des nasslaufenden Anlaufmoment erzielt wird, welches zur Beschleunigung des nasslaufenden Rotors ausreicht, ohne dabei das Rastmoment zu erhöhen. Die Aussparungen stellen hierbei erhöhte magnetische Widerstände dar, die das Magnetfeld in diesem Bereich schwächen. Für die Nichterhöhung des Rastmomentes ist bei der Anordnung der Aussparungen entscheidend, dass der Spalt beidseits der Aussparungen in Umfangsrichtung unverändert ist, so dass die Magnetfeldlinien in diesen Bereichen ungeschwächt sind.

Die Aussparungen können sich hierbei parallel zur Rotorachse und vorzugsweise über die gesamte Breite des Statorblechpaketes erstrecken. Auf diese Weise wird der Magnetfluss entlang der maximal möglichen axialen Länge des Rotors gleichartig beeinflusst, so dass die künstliche Ruheposition des Rotors mit hoher Sicherheit erreicht wird.

Weiterhin können die Aussparungen derart geformt sein, dass der Luftspalt in Umfangsrichtung des Rotors kontinuierlich bis zu einem Maximum vergrößert ist und nach Erreichen der maximalen Spaltbreite kontinuierlich wieder kleiner wird. Auf diese Weise werden die Magnetfeldlinien beidseits der Aussparungen in Umfangsrichtung nur leicht geschwächt und zum Bereich der maximalen Spaltbreite hin zunehmend stärker geschwächt, wobei bei maximaler Spaltbreite eine maximale Abschwächung der Magnetfeldlinien bewirkt wird. Mit dieser Maßnahme werden sprunghafte Spaltänderungen und damit einhergehende abrupte Verzerrungen der Magnetfeldlinien vermieden und eine Erhöhung des Rastmomentes vermieden.

In einer bevorzugten Ausführungsvariante können die Aussparungen im wesentlichen teilzylindrisch insbesondere halbzylindrisch ausgebildet sein, wobei in diesem Falle die Zylinderachsen parallel zur Rotorachse verlaufen können. Die Aussparungen können im Querschnitt betrachtet auch eine andere Form, beispielsweise eine Dreieckform aufweisen, wobei in diesem Falle der Schwerpunkt der geometrischen Form im Querschnitt die entsprechende Achse definiert.

Vorzugsweise können die Aussparungen symmetrisch angeordnet sein, nämlich zueinander um etwa 180° versetzt sein, so dass sie sich im wesentlichen diametral gegenüberliegen. Hierdurch wird ebenfalls dazu beigetragen, dass sich der Rotor in der gewünschten künstlichen Ruheposition einpendelt, ohne das Rastmoment dabei zu erhöhen.

Um ein ausreichend hohes Anlaufmoment zu gewährleisten können die Aussparungen derart angeordnet sein, dass die durch die Schwerpunktachse einer Aussparung und die Rotorachse gebildete Ebene mit der Mittelebene zwischen den Polschenkeln einen Winkel von weniger als 80°, vorzugsweise weniger als 70° bildet. Die Schwerpunktachse ist dabei als geometrischer Ort derjenigen Punkte zu verstehen, die die Schwerpunkte der Geometrie einer Aussparung im Querschnitt darstellen. Im Falle einer im Querschnitt betrachteten halbzylindrischen Ausprägung der Aussparungen stellt die Schwerpunktachse die Zylinderachse dar. Die Mittelebene ist demgegenüber dadurch gekennzeichnet, dass sie durch die Mitte des Abstandes der beiden Polschenkel gebildet ist.

Die Herstellung des erfindungsgemäßen Statorpaketes kann auf besonders einfache Weise dadurch erfolgen, dass die Aussparungen der einzelnen Statorbleche ausgestanzt werden.

Weitere Merkmale und Vorteile der erfindungsgemäßen Synchronmaschine sind den Figuren sowie der nachfolgenden detaillierten Beschreibung der Erfindung zu entnehmen.

Es zeigen:
- Fig. 1:: Rast- und Anlaufmoment, ohne Aussparungen
- Fig. 2:: Einphasige Synchronmaschine mit Rotorwinkel ϕ = 0° mechanisch.

In Figur 1 ist die Abhängigkeit des Anlaufmomentes M_{Anl} von der Rotorwinkelwinkelposition ϕ zum Einschaltzeitpunkt bei einphasigen Synchronmaschinen ohne Aussparungen an den Statorpolen gemäß Stand der Technik dargestellt. Die natürliche Rotorposition entspricht der Rotorstellung in 0°, d.h. bei einem senkrecht zu den Statorpolen ausgerichtetem Rotormagnetfeld. Aus der Figur ist ersichtlich, dass das Rastmoment bei 0°, 90° und 180° jeweils gleich 0 ist und bei dem Rotorwinkel ϕ = 45°, ϕ = 135° maximal ist. Dem gegenüber ist das Anlaufmoment bei einem mechanischem Rotorwinkel ϕ von etwa 102° gerade an seinem maximalen Wert. Es ist in den Rotorwinkelstellungen 0° und 180° ebenfalls gleich dem Wert 0. Der Rotorwinkel ϕ ist in Figur 2 zur Veranschaulichung dargestellt und auf die Mittelebene zwischen den Statorpolen bezogen.

Figur 2 zeigt eine einphasige permanent erregte Synchronmaschine 1 mit einem Statorpaket 2 an dessen langen Statorschenkeln oder Armen jeweils eine Wicklung 3 zur Aufmagnetisierung des Statorpaketes angeordnet ist. Das Statorpaket 2 ist geblecht, wobei Figur 2 den erfindungsgemäßen Motor im Querschnitt darstellt. An den Enden der Statorschenkel ist jeweils ein Statorpol mit einem Polschenkel 4 ausgebildet, zwischen denen der permanent magnetische Rotor 5 angeordnet ist. Der Rotor 5 ist hier zweipolig ausgeführt. Figur 2 zeigt die Synchronmaschine mit Rotorwinkel ϕ = 0°. Die Magnetisierungsrichtung des Rotors ist durch Pfeile A dargestellt.

Die Polschenkel 4 weisen halbzylindrische Aussparungen 6 auf, die sich parallel zur Rotorachse und entlang der gesamten Dicke des Statorblechpaketes 2 erstrecken. Die Aussparungen 6 sind diametral angeordnet, damit das Rastmoment keine wesentliche Erhöhung erfährt. Durch ihre im Querschnitt betrachtet zylindrische Ausführung ist der Spalt in Umfangsrichtung kontinuierlich bis zu einem Maximum vergrößert, wobei beidseits der Aussparung in Umfangsrichtung der Spalt seine normale Größe aufweist. Hierdurch werden die Magnetfeldlinien beidseits der Aussparungen 6 nahezu ungeschwächt geführt.

Die Aussparungen 6 sind derart angeordnet, dass die durch die Zylinderachse einer Aussparung 6 und die Rotorachse gebildete Ebene mit der Mittelebene 7 zwischen den Polschenkeln 4 einen Winkel α von weniger als 70 Grad bildet. Je geringer der Winkel α gewählt wird, um so höher ist das Anlaufmoment.

Durch diese Maßnahme werden die Rastmomente, die im Betrieb des Motors augrund der resultierenden Geräusche und Drehmomentschwankungen unerwünscht sind, nur geringfügig erhöht, wobei gleichzeitig die Ruhelage des Rotors 5 so beeinflusst wird, dass ein deutlich höheres Anlaufmoment M_{Anl} aufgebracht wird. Die künstlich erzeugte Ruhelage liegt in diesem Fall bei einem mechanischen Rotorwinkel von ϕ ≈ 5°.

Die einphasige permanent-magnetische Synchronmaschine 1 gemäß Figur 2 ist in Nassläufertechnik ausgeführt, so dass der Rotor 5 in einer Flüssigkeit dreht und zum Antrieb einer Pumpe dient. Die angetriebene Pumpe ist eine Umwälzpumpe für Heizungsanlagen oder Brauchwasser. In Betrieb derartiger Motoren kommt es mittelfristig zu Verkalkungen und Verschmutzungen, die den Anlauf des Motors erschweren und das beim Anlauf zu überwindende Lastmoment erhöhen. Durch die Lage und Form der Aussparungen 6 wird das Rastmoment ortsspezifisch derart gezielt beeinflusst, dass der Rotor 5 bei nicht erregten Ständerwicklungen 3 in einer von der natürlichen Ruheposition abweichenden künstlichen Ruheposition einpendelt, die bei Erregung der Ständerwicklungen 3 und Entstehung eines magnetischen Flusses durch das Ständerblechpaket ein zur Beschleunigung des Rotors 5 ausreichendes Anlaufmoment M_{Anl} erzeugt.

## Patentansprüche

1. Nassläuferpumpe mit einer einphasigen permanent-erregten Synchronmaschine (1), umfassend mindestens eine Statorwicklung (3), ein geblechtes Statorpaket (2) mit zwei Polschenkeln (4) und einen 2-poligen permanent-erregten Rotor (5), der zwischen den Polschenkeln (2) unter Bildung eines magnetischen Spaltes angeordnet wobei die Polschenkel (4) jeweils an einer definierten Position genau eine im Wesentlichen teilzylindrische Aussparung (6) mit einer zur Rotorachse parallel verlaufenden Zylinderachse derart aufweisen, dass der magnetische Spalt an besagten Stellen vergrößert ist, und wobei der Spalt beidseits der Aussparungen in Umfangsrichtung unverändert ist **gekennzeichnet dadurch, dass** die durch die Schwerpunktsachsen der Aussparungen (6) und die Rotorachse gebildete Ebene mit der Mittelebene (7) zwischen den Polschenkeln einen Winkel α von weniger als 80°, vorzugsweise weniger als 70° bildet.

2. Nassläuferpumpe nach Anspruch 1, **dadurch gekennzeichnet, dass** sich die Aussparungen (6) parallel zur Rotorachse erstrecken.

3. Nassläuferpumpe nach Anspruch 1 oder 2, **dadurch gekennzeichnet, dass** die Aussparungen (6) derart geformt sind, dass der Luftspalt in Umfangsrichtung des Rotors (1) kontinuierlich bis zu einem Maximum vergrößert ist und nach Erreichen der maximalen Spaltbreite kontinuierlich wieder kleiner wird.

4. Nassläuferpumpe nach Anspruch 1, 2 oder 3, **dadurch gekennzeichnet, dass** die Aussparungen (6) im Wesentlichen halbzylindrisch ausgebildet sind.

5. Nassläuferpumpe nach einem der vorherigen Ansprüche, **dadurch gekennzeichnet, dass** die Aussparungen (6) der einzelnen Statorbleche ausgestanzt sind.

## Claims

1. Wet rotor pump with a single-phase permanent magnet synchronous machine (1), comprising at least one stator winding (3), a laminated stator pack (2) having two pole limbs (4) and a two-pole permanent magnet rotor (5), which is arranged between the pole limbs (2), forming a magnetic gap, the pole limbs (4) each having exactly one substantially part-cylindrical cutout (6) with a cylinder axis extending parallel to the rotor axis at a defined position, in such a way that the magnetic gap is enlarged at the aforesaid points, and the gap being unchanged in the circumferential direction on both sides of the cutouts,
**characterized in that** the plane formed by the axes of the centres of gravity of the cutouts (6) and the rotor axis forms an angle α of less than 80°, preferably less than 70°, with the mid-plane (7) between the pole limbs.

2. Wet rotor pump according to Claim 1, **characterized in that** the cutouts (6) extend parallel to the rotor axis.

3. Wet rotor pump according to Claim 1 or 2, **characterized in that** the cutouts (6) are shaped in such a way that the air gap is enlarged continuously in the circumferential direction of the rotor (1) up to a maximum and, after reaching the maximum gap width, becomes continuously smaller again.

4. Wet rotor pump according to Claim 1, 2 or 3, **characterized in that** the cutouts (6) are formed substantially semi-cylindrically.

5. Wet rotor pump according to one of the preceding claims, **characterized in that** the cutouts (6) of the individual stator laminations are punched out.

## Revendications

1. Pompe à rotor noyé comprenant une machine synchrone à excitation permanente monophasée (1), comprenant au moins un enroulement statorique (3), un empilement de stator feuilleté (2) avec deux branches polaires (4) et un rotor à excitation permanente à 2 pôles (5) qui est disposé entre les branches polaires (2) en formant un interstice magnétique, les branches polaires (4) présentant chacune, en une position définie, exactement un évidement sensiblement partiellement cylindrique (6) avec un axe de cylindre s'étendant parallèlement à l'axe du rotor, de telle sorte que l'interstice magnétique soit augmenté auxdits emplacements, et l'interstice n'étant pas modifié des deux côtés des évidements dans la direction périphérique,
**caractérisée en ce que** le plan formé par les axes de gravité des évidements (6) et l'axe de rotor forme avec le plan médian (7) entre les branches polaires un angle α inférieur à 80°, de préférence inférieur à 70°.

2. Pompe à rotor noyé selon la revendication 1, **caractérisée en ce que** les évidements (6) s'étendent parallèlement à l'axe de rotor.

3. Pompe à rotor noyé selon la revendication 1 ou 2, **caractérisée en ce que** les évidements (6) sont formés de telle sorte que l'entrefer augmente en continu dans la direction périphérique du rotor (1) jusqu'à un maximum et diminue à nouveau en continu après avoir atteint la largeur d'entrefer maximale.

4. Pompe à rotor noyé selon la revendication 1, 2 ou 3, **caractérisée en ce que** les évidements (6) sont réalisés essentiellement sous forme semi-cylindrique.

5. Pompe à rotor noyé selon l'une quelconque des revendications précédentes, **caractérisée en ce que** les évidements (6) des tôles statoriques individuelles sont découpés par estampage.
